Europäisches Patentamt

European Patent Office

Office européen des brevets

(19)

(11) Veröffentlichungsnummer: **0 229 950**
**B1**

(12) **EUROPÄISCHE PATENTSCHRIFT**

(45) Veröffentlichungstag der Patentschrift: **18.07.90**

(51) Int. Cl.⁵: **H 02 M 3/156, H 02 M 7/217**

(21) Anmeldenummer: **86116808.6**

(22) Anmeldetag: **03.12.86**

(54) **Transformatorloses Netzgerät.**

(30) Priorität: **20.12.85 DE 3545323**

(43) Veröffentlichungstag der Anmeldung:
**29.07.87 Patentblatt 87/31**

(45) Bekanntmachung des Hinweises auf die
Patenterteilung:
**18.07.90 Patentblatt 90/29**

(84) Benannte Vertragsstaaten:
**AT CH DE FR GB IT LI NL**

(56) Entgegenhaltungen:
**EP-A-0 106 041**
**DE-A-1 513 485**
**US-A-3 754 182**

(73) Patentinhaber: **Braun Aktiengesellschaft
Rüsselsheimer Strasse 22
D-6000 Frankfurt/Main (DE)**

(72) Erfinder: **Schwarz, Gerhard
Eggestrasse 16
D-5990 Altena (DE)**

(74) Vertreter: **Einsele, Rolf
Braun Aktiengesellschaft Postfach 1120
Frankfurter Strasse 145
D-6242 Kronberg Taunus (DE)**

Courier Press, Leamington Spa, England.

**Beschreibung**

Die Erfindung bezieht sich auf ein transformatorloses Netzgerät mit einem ersten Transistor, dessen Hauptstromstrecke über eine Gleichrichtereinrichtung mit einer Eingangswechselspannungsquelle in Verbindung steht und dessen Steuerelektrode von der an einer Last und einem dazu parallel geschalteten Kondensator anliegenden Ausgangsspannung angesteuert ist.

Aus der Valvo Broschüre "Eigenschaften und Anwendungen von Silizium-Z-Dioden", Ausgabe September 1968, ist aus Bild 19 auf Seite 36 ein Spannungsstabilisator mit Paralleltransistor bekannt. Die Basis des parallel zur Last liegenden Transistors ist hierbei mit dem Verbindungspunkt eines Widerstandes und einer Zenerdiode, die ebenfalls parallel zur Last liegen, verbunden. Die Eingangsspannung, die allerdings hier eine Gleichspannung ist, wird über einen Vorwiderstand RV zugeführt. Wie auf Seite 39 der genannten Broschüre ausgeführt wird, ist bei dieser Schaltung die Kurzschlußfestigkeit bei genügend stark dimensioniertem Vorwiderstand RV zwar gegeben, nachteilig ist jedoch, daß bei Leerlauf der Transistor den gesamten Ladestrom übernimmt und daher für eine verhältnismäßig hohe Verlustleistung ausgelegt sein muß und außerdem ein ständiger Stromverbrauch in Höhe des Nennstromes auftritt.

Aufgabe der Erfindung ist es, ein transformatorloses Netzteil der eingangs genannten Art so auszubilden, daß es sowohl kurzschlußfest ist als auch eine geringe Verlustleistung bei Leerlauf aufweist.

Diese Aufgabe wird erfindungsgemäß dadurch gelost, daß die Steuerelektrode des ersten Transistors vom Ausgang eines Schmitt-Triggers, dessen einer Eingang von der Ausgangsspannung beaufschlagt ist und dessen anderer Eingang an einer Referenzspannung liegt, angesteuert ist, daß zwischen der Gleichrichtereinrichtung und der Eingangsspannungsquelle ein den Strom begrenzenden kapazitiver Blindwiderstand angeordnet ist und daß zwischen der Hauptstromstrecke des ersten Transistors und der Last eine Entkopplungsdiode liegt.

Diese erfindungsgemäße Lösung weist den Vorteil auf, daß sie kurzschlußfest ist und im Leerlauf praktisch keine Wirkleistung verbraucht. Darüberhinaus hat das erfindungsgemäße transformatorlose Netzteil ein kleines Volumen und weist einen geringen Aufwand an Bauelementen auf. Es erfolgt eine gute Stabilisierung der Ausgangsspannung und eignet sich generell für elektrische Geräte mit bis zu einigen Watt Ausgangsleistung.

Vorteilhafte Ausgestaltungen sind den Unteransprüchen entnehmbar.

Im folgenden werden Ausführungsbeispiele der Erfindung an Hand der Zeichnung näher beschrieben.

Es zeigen.

Fig. 1 ein Blockschaltbild einer Ausführungsform,

Fig. 2 eine detailliertere Darstellung der in Fig. 1 gezeigten Ausführungsform und

Fig. 3 ein Ausgangskennlinienfeld als Beispiel bei einer bestimmten Dimensionierung.

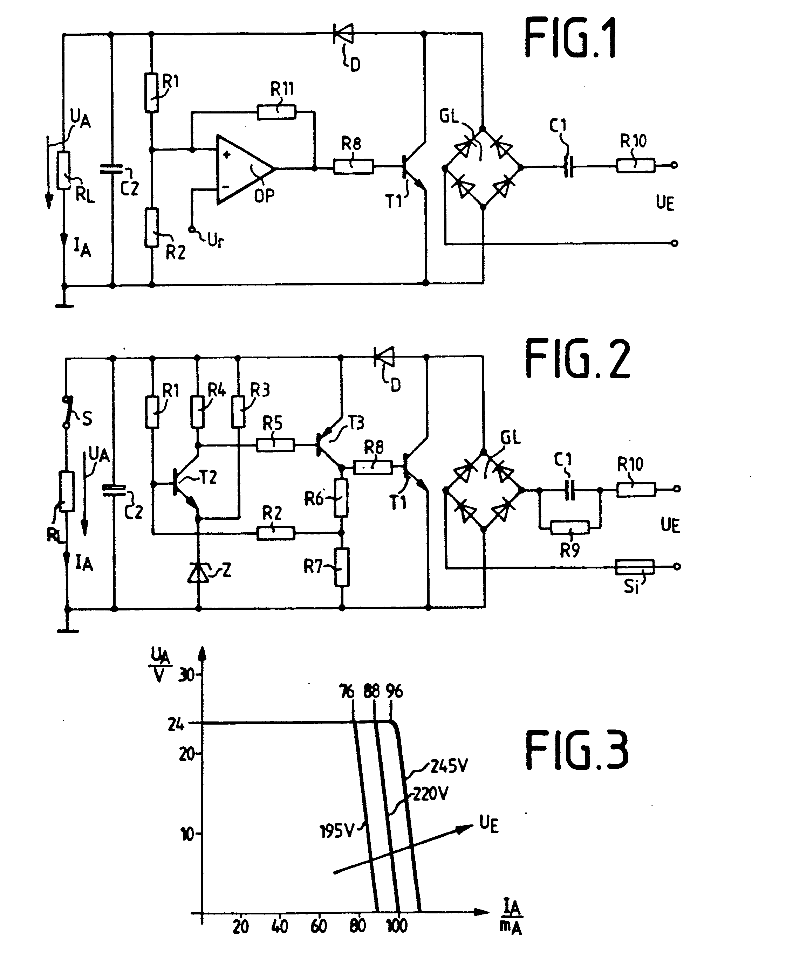

In dem in Fig. 1 dargestellten Blockschaltbild eines Ausführungsbeispiels der Erfindung wird die Eingangswechselspannung UE, die beispielsweise eine Netzspannung von 220 Volt darstellt, über einen Vorwiderstand R10 und einen den kapazitiven Blindwiderstand darstellenden Kondensator C1 einem Brückengleichrichter G1 zugeführt. Der das Pluspotential bildende Ausgang des Brückengleichrichters G1 liegt am Kollektor eines ersten Transistors T1, der den Schalttransistor darstellt, und über eine Entkopplungsdiode D an dem einen Anschluß einer Last RL und eines dazu parallel geschalteten Glättungskondentors C2. Der das Bezugspotential bildende Ausgang des Brückengleichrichters G1 liegt am Emitter des Schalttransistors T1 und am anderen Anschluß der Last RL. Parallel zur Last RL und dem Kondensator C2 liegt ein Spannungsteiler R1/R2, dessen oberer Anschlußpunkt mit der Kathode der zwischen diesem Anschlußpunkt und dem Kollektor des Transistors T1 liegenden Entkopplungsdiode D verbunden ist und dessen Verbindungspunkt an den nicht invertierenden Eingang (+) eines Operationsverstärkers OP geführt ist. An den invertierenden Eingang (−) des Operationsverstärkers OP ist eine Referenzspannung Ur gelegt, dessen Größe von der gewünschten Ausgangsspannung UA und dem Spannungsteilerverhältnis R1/R2 abhängt. Der Ausgang des Operationsverstärkers ist über einen Gegenkopplungswiderstand R11 mit dem nicht invertierenden Eingang und über einen Widerstand R8 mit der Basis des Transistors T1 verbunden.

Der Ausgang des Schmitt-Triggers schaltet den Transistor T1 leitend wenn die am nicht invertierenden Eingang liegende Spannung, die der Ausgangsspannung UA proportional ist, seine Einschaltschwelle überschreitet. Dadurch fließt der durch den kapazitiven Blindwiderstand C1 bestimmte Strom nicht in die Last RL sondern über die Kollektor-Emitter-Strecke des Transistors T1 an der Last vorbei zum Bezugspotential.

Wenn die Ausgangsspannung UA soweit abgesunken ist, daß die am Eingang des Schmitt-Triggers anliegende Teilspannung die Ausschaltschwelle erreicht, wird der Schalttransistor T1 gesperrt und der Strom fließt über die Entkopplungsdiode D wieder in die Last RL bzw. den Kondensator C2.

Da der Strom im Leerlauf im wesentlichen durch den Schalttransistor T1 an der Last RL vorbeifließt und dadurch fast ein reiner Blindstrom ist, ist die aufgenommene Wirkleistung im Leerlauf gering. Da bei Kurzschluß der Strom wegen Fehlens des Lastwiderstands ebenfalls praktisch ein reiner Blindstrom ist, ist auch in diesem Fall die aufgenommene Wirkleistung gering.

Die Welligkeit der Ausgangsspannung hängt von der Hysterese des Schmitt-Triggers ab. Die Schaltfrequenz bzw. die Ein- oder Ausschaltdauer des Schmitt-Triggers und damit des Transistors T1 hängt von der aufgenommenen Wirkleistung der Last RL ab.

In Fig. 2 ist eine detaillierte Ausführungsform des Schmitt-Triggers nach Fig. 1 dargestellt, die sich, trotz ihrer Einfachheit und der Verwendung billiger Bauteile, durch eine gute Stabilisierung der Ausgangsspannung UA sowohl bei sich änderndem Laststrom IA als auch bei schwankender Eingangsspannung UE auszeichnet.

Der hier dargestellte Schmitt-Trigger besteht im wesentlichen aus den beiden Transistoren T2 und T3, wobei der Kollektor des Transistors T2 über den Widerstand R4 mit Pluspotential und über den Widerstand R5 mit der Basis des Transistors T3 verbunden ist. Der den invertierenden Eingang des Schmitt-Triggers bildende Emitter des Transistors T2 ist über den Widerstand R3 mit Pluspotential und über die Zenerdiode Z, die hier die Referenzspannung liefert, mit Bezugspotential verbunden. Die Basis des Transistors T2 stellt den nicht invertierenden Eingang des Schmitt-Triggers dar und ist an den Verbindungspunkt des Spannungsteilers R1/R2 gelegt. Der Fußpunkt des Spannungsteilers R1/R2 liegt am Verbindungspunkt des ebenfalls als Spannungsteiler R6/R7 ausgebildeten Kollektorwiderstandes des Transistors T3. Der Kollektor des Transistors T3, dessen Emitter an Pluspotential angeschlossen ist, stellt den Ausgang des Schmitt-Triggers dar und ist über den Widerstand R8 mit der 8asis des Schalttransistors T1 verbunden.

Der die Konstantstromquelle bildende Kondensator C1 ist mit einem Widerstand R9 überbrückt, um bei Ziehen des Netzsteckers den Kondensator C1 zu entladen. Der Vorwiderstand R10 dient lediglich dazu, den Strom bei Anlegen der Netzspannung UE im ersten Augenblick zu begrenzen. Da das Netzgerät im Leerlauf praktisch keine Leistung verbraucht, kann der Schalter S zum Ein- und Ausschalten des Netzgeräts in Serie zur Last geschaltet werden, so daß nicht die Netzspannung UE sondern lediglich die niedrigere Ausgangsspannung UA geschaltet werden muß.

Die Last kann beispielsweise ein 24 Volt Motor sein, der Bestandteil eines Gerätes ist, das nur eine verhältnismäßig geringe Leistung (z.B. einige Watt) benötigt.

In Fig. 3 ist als Beispiel für eine zu stabilisierende Ausgangsspannung von 24 Volt bei einem Kondensator C1 von 1,5 μ F das Ausgangskennlinienfeld dargestellt. Wie hieraus ersichtlich ist, bleibt die Ausgangsspannung UA bei unterschiedlichem Laststrom IA bis zu einem bestimmten maximalen Laststrom, der lediglich von der Höhe der Eingangsspannung UE abhängig ist, konstant. Z.B. bleibt die Ausgangsspannung UA konstant auf 24 Volt bis zu einem Ausgangsstrom von 76 mA bei UE = 195 Volt, von 88 mA bei UE = 220 Volt und von g6 mA bei UE = 245 Volt. Bei Kurzschluß oder Leerlauf des Netzgeräts fließt praktisch nur ein reiner Blindstrom, dessen Höhe durch die Kapazität von C1 bestimmt wird. Er entspricht den Werten in Fig. 3, in denen die dargestellten Kurven die Abszisse schneiden.

Bei dem Beispiel einer Ausgangsspannung von UA = 24 Volt kann man in Fig 2 eine Zenerdiode Z mit einer Zenerspannung von 12 Volt vorsehen die Widerstände R1 und R2 gleich dimensionieren und den Widerstand R7 so, daß an ihm die Basis-Emitter-Spannung des Transistors T2 abfällt. Steigt nun die Ausgangsspannung UA auf über 24 Volt, wird T2 leitend, wodurch das Basispotential von T3 auf ca. plus 12 Volt heruntergezogen wird und somit T3 ebenfalls leitend wird. Hierdurch erhöht sich auch das Basispotential des Schalttransistors T1 und dieser schaltet ebenfalls durch. Sinkt nun die Ausgangsspannung auf unter 24 Volt, sperrt der Transistor T2 und damit auch die Transistoren T3 und T1 und es kann über die Entkopplungsdiode D wieder Strom in den Lastkreis fließen.

Da also der Schalttransistor T1 entweder ganz gesperrt ist oder in der Sättigung betrieben wird und der von dem Kondensator C1 begrenztel Strom ein fast reiner Blindstrom ist, treten in dem Netzgerät nur sehr geringe Verlustleistungen auf.

Es können auch billige Bauteile verwendet werden, da an den Transistoren und an den Dioden nur verhältnismäßig geringe Sperrspannungen auftreten. An den Transistoren T2 und T3 des Schmitt-Triggers und an der Entkopplungsdiode D sind die Sperrspannungen gleich der Summe der Ausgangsspannung und der überlagerten Wechselspannung. Die Sperrspannung des Schalttransistors T1 ist gleich der Summe von Ausgangsgleichspannung, überlagerter Wechselspannung und Durchlaßspannung der Entkopplungsdiode D. Die Sperrspannung der Gleichrichterbrücke G1 ist gleich der Summe von Ausgangsgleichspannung, überlagerter Wechselspannung, Durchlaßspannung der Entkopplungsdiode und zweimal der Durchlaßspannung einer Gleichrichterdiode.

## Patentansprüche

1. Transformatorloses Netzgerät mit einem ersten Transistor (T1) dessen Hauptstromstrecke über eine Gleichrichtereinrichtung (G1) mit einer Eingangswechselspannungsquelle (UE) in Verbindung steht und dessen Steuerelektrode von der an einer Last (RL) und einem dazu parallel geschalteten Kondensator (C2) anliegenden Ausgangsspannung (UA) angesteuert ist, dadurch gekennzeichnet, daß die Steuerelektrode des ersten (Transistors T1) vom Ausgang eines Schmitt-Triggers, dessen einer Eingang von der Ausgangsspannung (UA) beaufschlagt ist und dessen anderer Eingang an einer Referenzspannung (Ur) liegt angesteuert ist daß zwischen der Gleichrichtereinrichtung (G1) und der Eingangsspannungsquelle (UE) ein den Strom begrenzenden kapazitiver Blindwiderstand (C1) angeordnet ist und daß zwischen der Hauptstromstrecke des ersten Transistors (T1) und der Last (RL) eine Entkopplungsdiode (D) liegt.

a) die Basis des zweiten Transistors (T2) den nicht invertierenden Eingang (+) bildet und der Emitter, der zusätzlich über einen ersten Widerstand (R3) mit dem anderen Anschluß der Last (RL) verbunden ist, den invertierenden Eingang (−) bildet,

b) der Kollektor des dritten Transistors (T3) mit der Basis des ersten Transistors (T1) und über einen zweiten Widerstand (R6, R7) mit dem einen Anschluß der Last (RL) in Verbindung steht, und

c) der Kollektor des zweiten Transistors (T2) über einen dritten Widerstand (R4) mit dem anderen Anschluß der Last (RL) und über einen vierten Widerstand (R5) mit der Basis des dritten Transistors (T3) verbunden ist.

4. Transformatorloses Netzgerät nach Anspruch 3, dadurch gekennzeichnet, daß der zweite Widerstand als zweiter Spannungsteiler (R6, R7) ausgebildet ist, an dessen Verbindungspunkt das eine Ende des ersten Spannungsteilers (R1, R2) geführt ist.

5. Transformatorloses Netzgerät nach einem der vorhergehenden Ansprüche, dadurch gekennzeichnet, daß parallel zu dem kapazitiven Blindwiderstand (C1) ein fünfter Widerstand (R9) geschaltet ist.

6. Transformatorloses Netzgerät nach einem der vorhergehenden Ansprüche, dadurch gekennzeichnet, daß in Reihe zu dem kapazitiven Blindwiderstand (C1) ein Vorwiderstand (R10) geschaltet ist.

7. Transformatorloses Netzgerät nach einem der vorhergehenden Ansprüche, dadurch gekennzeichnet, daß die Last (RL) ein Gleichstrommotor ist.

**Revendications**

1. Bloc d'alimentation en courant, sans transformateur, comportant un premier transistor (T1) dont l'élément de circuit principal est relié, par l'intermédiaire d'un organe redresseur (G1), avec une source de tension alternative d'entrée (UE) et dont la gâchette est pilotée par la tension de sortie (UA) appliquée à une charge (RL) et à un condensateur (C2) monté en parallèle avec elle, caractérisé en ce que la gâchette du premier transistor (T1) est pilotée par la sortie d'une bascule Schmitt dont la première entrée est sollicitée par la tension de sortie (UA) et dont l'autre entrée est à une tension de référence (Ur); en ce qu'entre l'organe redresseur (G1) et la source de tension d'entrée (UE) est disposée une réactance capacitive (C1) qui limite l'intensité; et en ce qu'entre l'élément de circuit principal du premier transistor (T1) et la charge (RL) se trouve une diode de découplage (D).

2. Bloc d'alimentation en courant sans transformateur selon la revendication 1, caractérisé en ce que l'entrée (+), qui ne change pas le signe, de la bascule Schmitt (OP, R11) est reliée au point de liaison d'un premier diviseur de tension (R1, R2) monté en parallèle avec la charge (RL); et en ce que l'entrée (−), qui change le signe, de la bascule Schmitt est reliée, par l'intermédiaire d'une diode Zener (Z), avec la première borne de la charge.

3. Bloc d'alimentation en courant sans transformateur selon la revendication 2, caractérisé en ce que la bascule Schmitt est constituée d'un second et d'un troisième transistors (T2, T3), étant précisé que

a) la base du second transistor (T2) forme l'entrée (+) qui ne change pas le signe et l'émetteur, qui est en outre, relié, par l'intermédiaire d'une première résistance (R3), avec l'autre borne de la charge (RL), forme l'entrée (−) qui change le signe,

b) le collecteur du troisième transistor (T3) est reliée avec la base du premier transistor (T1) et, par l'intermédiaire d'une seconde résistance (R6, R7), avec la première borne de la charge (RL), et

c) le collecteur du second transistor (T2) est relié par l'intermédiaire d'une troisième résistance (R4) avec l'autre borne de la charge (RL) et, par l'intermédiaire d'une quatrième résistance (R5), avec la base du troisième transistor (T3).

4. Bloc d'alimentation en courant sans transformateur selon la revendication 3, caractérisé en ce que la seconde résistance est conçue sous forme d'un second diviseur de tension (R6, R7) au point de liaison duquel arrive la première extrémité du premier diviseur de tension (R1, R2).

5. Bloc d'alimentation en courant sans transformateur selon l'une des revendications précédentes, caractérisé en ce qu'une cinquième résistance (R9) est montée en parallèle avec la réactance capacitive (C1).

6. Bloc d'alimemtation en courant sans transformateur selon l'une des revendications précédentes, caractérisé en ce qu'une prérésistance (R10) est montée en série avec la réactance capacitive (C1).

7. Bloc d'alimentation en courant sans transformateur selon l'une des revendications précédentes, caractérisé en ce que la charge (RL) est un moteur à courant continu.

**Claims**

1. A transformerless power supply including a first transistor (T1) whose main circuit path is connected to a source of AC input voltage (UE) through a rectifier arrangement (GL) and whose control electrode is driven by the output voltage (UA) applied to a load (RL) and to a capacitor (C2) connected in parallel thereto, characterized in that the control electrode of the first transistor (T1) is driven by the output of a Schmitt Trigger having the output voltage (UA) applied to its one input while its other input is connected to a reference voltage (Ur), that a capacitive reactor (C1) limiting the current is arranged between the rectifier arrangement (GL) and the input voltage source (UE), and that a decoupling diode (D) is provided between the main circuit path of the first transistor (T1) and the load (RL).

2. A transformerless power supply as claimed in claim 1, characterized in that the non-inverting (positive) input of the Schmitt Trigger (OP, R11) is connected to the junction of a first voltage divider (R1, R2) arranged in parallel with the load (RL), and that the inverting (negative) input of the Schmitt Trigger is connected to the one terminal of the load via a Zener diode (Z).

3. A transformerless power supply as claimed in claim 2, characterized in that the Schmitt Trigger is comprised of a second and a third transistor (T2, T3), wherein

(a) the base of the second transistor (T2) provides the non-inverting (positive) input while the emitter which is further connected to the other terminal of the load (RL) via a first resistor (R3) provides the inverting (negative) input;.

(b) the collector of the third transistor (T3) is connected to the base of the first transistor (T1) and, via a second resistor arrangement (R6, R7), to the one terminal of the load (RL); and

(c) the collector of the second transistor (T2) is connected to the other terminal of the load (RL) via a third resistor (R4) and to the base of the third transistor (T3) via a fourth resistor (R5).

4. A transformerless power supply as claimed in claim 3, characterized in that the second resistor arrangement is configured as a second voltage divider (R6/R7) having the one end of the first voltage divider (R1, R2) applied at its junction.

5. A transformerless power supply as claimed in any one of the preceding claims, characterized in that a fifth resistor (R9) is connected in parallel with the capacitive reactor (C1).

6. A transformerless power supply as claimed in any one of the preceding claims, characterized in that a dropping resistor (R10) is connected in series with the capacitive reactor (C1).

7. A transformerless power supply as claimed in any one of the preceding claims, characterized in that the load (RL) is a DC motor.

FIG.1

FIG.2

FIG.3